# EUROPEAN PATENT APPLICATION

(11) **EP 2 687 707 A2**
(43) Date of publication of application: **22.01.2014**
(21) Application number: 13174080.5
(22) Date of filing: 27.06.2013
(51) Int. Cl.: F02D 41/00

(54) **A large reciprocating piston combustion engine, a control apparatus and a method for controlling such an engine**

(30) Priority: 17.07.2012 EP 12176686
(71) Applicant: Wärtsilä Schweiz AG, 8401 Winterthur (CH)
(72) Inventor: Knipström, Leif, 8408 Winterthur (CH); Schulz, Reiner Dr., 8303 Bassersdorf (CH); Schmitz, Peter, 8400 Winterthur (CH); Sudwoj, Gregory, 8482 Sennhof/Winterthur (CH)
(74) Representative: Intellectual Property Services GmbH

(57) **Abstract**

A large reciprocating piston combustion engine (1) comprises at least one cylinder equipped with a cylinder liner (4), at least one piston (6) movably arranged within the cylinder liner, and a crankshaft (2) rotatably arranged in a crankshaft housing, with each piston being connected to a crosshead (8) via a piston rod (7) and with the crosshead being connected to the crankshaft (2) via a connecting rod (9) to drive the crankshaft, wherein each cross head (8) is provided with a control apparatus (10) for controlling the compression ratio of the reciprocating piston combustion engine.

## Description

The invention relates to a large reciprocating piston combustion engine according to the preamble of claim 1 and to a control apparatus and a method for controlling the compression ratio of a large reciprocating piston combustion engine according to the preamble of claim 12 and 14 respectively.

In a reciprocating piston combustion engine the compression ratio is an important parameter for the combustion, the thermal efficiency and for the exhaust gas emissions. The compression ratio is usually chosen to yield the best engine performance. Often the high load engine performance is the most relevant point for the choice. For optimal performance over the whole operating range a variable compression ratio would be desirable but due to complications with such a system a compromise is usually made defining a constant compression ratio.

For reciprocating piston combustion engines capable of running on different fuel qualities having different ignition properties or for so called dual fuel engines capable of running on both liquid diesel oil according to the diesel cycle and on gas according to the otto cycle the problem becomes even more critical. Since the common compression ratio range where it is possible to run both the diesel cycle with diesel oil and the otto cycle with gas is very narrow. In such a case a compromise has to be made on both the diesel cycle and the otto cycle performance. This may be possible in some cases, but for optimum engine performance a variable compression ratio is needed.

Different solutions are known for varying the compression ration in smaller reciprocating piston combustion engines, such as eccentric sleeves around the piston pin or around the main bearing, or eccentric shafts and mechanisms for regulating the distance between the cylinder head and the crankshaft centre line. These solutions are often rather complicate and can not easily be adapted to large reciprocating piston combustion engines without a major redesign of the engine. In addition, these solutions would require a lot more steel and iron to ensure a rigid engine structure in a large engine.

Moreover, known large reciprocating piston combustion engines and in particular large two-stroke reciprocating piston combustion engines of the diesel type such are used, for example, in ships and power stations, have a construction which is different from the construction of smaller reciprocating piston combustion engines. Known large reciprocating piston combustion engines comprise one or more cylinders equipped with a cylinder liner respectively, one or more pistons movably arranged within the respective cylinder liner, and a crankshaft rotatably arranged in a crankshaft housing, with each piston being connected to a respective crosshead via a piston rod, and with each crosshead being connected to the crankshaft via a connecting rod to drive the crankshaft. The piston rods are typically guided rectilinearly along their longitudinal axis, and the respective crosshead converts the rectilinear movement of the piston rod into a non-rectilinear movement of the connecting rod.

A large variable compression ratio diesel engine is described in JP 61-197731 A. The described diesel engine comprises a displaceable exit valve seat for varying the compression ratio. This solution is considered bulky and a comparatively large amount of steel is needed for implementation of the solution.

It is an object of the present invention to provide a large reciprocating piston combustion engine in which the compression ratio can be varied and in which control of the variable compression ratio needs little or no extra-space, and a control apparatus and a method for controlling the compression ratio of a large reciprocating piston combustion engine wherein the control apparatus can be integrated into the crosshead or into the piston.

This object is satisfied in accordance with the invention by the large reciprocating piston combustion engine defined in claim 1, and by the control apparatus and by the method defined in claim 12 and 15 respectively.

The large reciprocating piston combustion engine according to the invention comprises at least one cylinder equipped with a cylinder liner, at least one piston which is movably arranged within the cylinder liner, and a crankshaft which is rotatably arranged and/or journalled in a crankshaft housing, with the piston being in each case connected to a crosshead via a piston rod and with the crosshead being in each case connected to the crankshaft via a connecting rod to drive the crankshaft. In addition, either the crosshead or the piston or both are in each case provided with a control apparatus for controlling the compression ratio of the reciprocating piston combustion engine. The crosshead typically converts the rectilinear movement of the piston rod into a non-rectilinear movement of the connecting rod.

In an advantageous embodiment of the large reciprocating piston combustion engine the control apparatus comprises a drive mechanism provided in or at the cross head or in or at the piston for displacing the piston rod and/or piston with respect to the crosshead.

The control apparatus can for example comprise one or more of the following components: an eccentric crosshead pin which is rotatable, an eccentric bush mating with a crosshead pin, wherein the bush is rotatable, a turning mechanism for turning either the crosshead pin or the bush or both, and a locking mechanism for locking either the crosshead pin or the bush or both.

The control apparatus can optionally comprise a first thread part provided in connection with the piston rod, e.g. at an end of the piston rod, a second thread part mating with the first thread part, and a turning mechanism provided in or at the cross head or in or at the piston for turning the first or second thread part.

Alternatively or in addition the control apparatus can comprise at least one wedge shaped part, a counterpart, e.g. a wedge shaped counterpart, which is in working connection with both the wedge shaped part and the piston rod, and a drive mechanism for moving either the wedge shaped part or the counterpart or both.

In a further advantageous embodiment of the large reciprocating piston combustion engine the control apparatus comprises a guide for moving the piston with respect to and in parallel with the piston rod, or a piston head which is either movable or which contains a movable insert, and a drive mechanism for moving the piston with respect to the piston rod, or the piston head with respect to the piston or piston rod, or the insert with respect to the piston head or piston.

The turning mechanism or the drive mechanism mentioned in the embodiments described above is advantageously driven hydraulically.

In another advantageous embodiment the control apparatus comprises a hydraulic swing pump arranged in or at the crosshead for generating hydraulic pressure, wherein the swing pump comprises a hollow space, for example a hollow space having the form of a annular segment, and a swinging piston fitting, for example in a sealing way, into the hollow space, with either the hollow space or the swinging piston being connected to an end part of a connecting rod so that the swinging piston oscillates in the hollow space when the connecting rod is moved in operation.

The invention further includes a control apparatus for controlling the compression ratio of a large reciprocating piston combustion engine wherein the reciprocating piston combustion engine comprises at least one cylinder equipped with a cylinder liner, at least one piston which is movably arranged within the cylinder liner, and a crankshaft which is rotatably arranged and/or journalled in a crankshaft housing, with each piston being connected to the respective crosshead via a piston rod and with each crosshead being connected to the crankshaft via a connecting rod to drive the crankshaft, wherein the control apparatus according to the invention is in each case designed as part of the crosshead or integrated into the crosshead or into the crosshead pin.

In an advantageous embodiment the control apparatus comprises a drive mechanism for displacing the piston rod with respect to the crosshead and in the same direction as the piston.

The invention further includes a method for controlling the compression ratio of a large reciprocating piston combustion engine wherein the method includes providing a large reciprocating piston combustion engine comprising at least one cylinder equipped with a cylinder liner, at least one piston which is movably arranged within the cylinder liner, and a crankshaft which is rotatably arranged and/or journalled in a crankshaft housing, with the piston being in each case connected to a crosshead via a piston rod and with the crosshead being in each case connected to the crankshaft via a connecting rod to drive the crankshaft. The method in addition includes providing each crosshead and/or each piston with a control apparatus for controlling the compression ratio of the reciprocating piston combustion engine, and changing the compression ratio when a different fuel quality is supplied having different ignition properties or when the fuel supply is changed from diesel oil to gas or from gas to diesel oil.

The large reciprocating piston combustion engine according to the invention can be implemented as a two-stroke or four-stroke engine, for example as a four-stroke engine having a cylinder bore of greater than 160 mm or greater than 200 mm, or as a two-stroke engine having a cylinder bore of greater than 270 mm or greater than 300 mm diameter. Moreover, the large reciprocating piston combustion engine can be implemented as a large reciprocating piston combustion engine of the diesel type.

The large reciprocating piston combustion engine and the control apparatus and the method for controlling the compression ratio of a large reciprocating piston combustion engine according to the invention have the advantage that the control apparatus can be integrated into the crosshead or into the piston of the large reciprocating piston combustion engine and that only insignificant or no extra-space is needed for implementation, thus even allowing to retrofit existing large reciprocating piston combustion engines with variable compression ratio control.

The above description of the embodiments and variants serves merely as an example. Further advantageous embodiments can be seen from the dependent claims and the drawing. Moreover, in the context of the present invention, individual features from the described or illustrated embodiments and from the described or illustrated variants can be combined with one another in order to form new embodiments.

In the following the invention will be explained in more detail with reference to the specific embodiments and with reference to the drawing.
- Fig. 1: is an embodiment of a large reciprocating piston combustion engine according to the present invention;
- Figs. 2A, B: are cross sections through an embodiment of a control apparatus according to the present invention;
- Fig. 2C: is an embodiment of a locking mechanism for the embodiment shown in Figures 2A und B;
- Figs. 2D-F: are cross sections through an embodiment of a turning mechanism for the embodiment shown in Figures 2A und B;
- Fig. 3: is a cross section of a second embodiment of a control apparatus according to the present invention;
- Figs. 4A, B: are cross sections of a third embodiment of a control apparatus according to the present invention;
- Figs. 5A, B: are cross sections through an embodiment of a turning mechanism for one of the embodiments shown in Figures 2 to 4;
- Figs. 6A, B: are cross sections of a fourth and fifth embodiment of a control apparatus according to the present invention respectively;
- Fig. 7: is a cross section of a sixth embodiment of a control apparatus according to the present invention;
- Fig. 8: is a cross section of a seventh embodiment of a control apparatus according to the present invention;
- Figs. 9A, B: are cross sections of an eighth embodiment of a control apparatus according to the present invention;
- Figs. 10A,B: are cross sections of a ninth embodiment of a control apparatus according to the present invention;
- Figs. 11A,B: are cross sections of a tenth embodiment of a control apparatus according to the present invention;
- Figs. 12A,B: are cross sections of an eleventh embodiment of a control apparatus according to the present invention;
- Fig. 13: is a cross section of a twelfth embodiment of a control apparatus according to the present invention;
- Figs. 14A-C: are cross sections of a thirteenth embodiment of a control apparatus according to the present invention;
- Fig. 15: is a cross section of a fourteenth embodiment of a control apparatus according to the present invention; and
- Fig. 16: is an embodiment of a swing pump for a control apparatus according to the present invention.

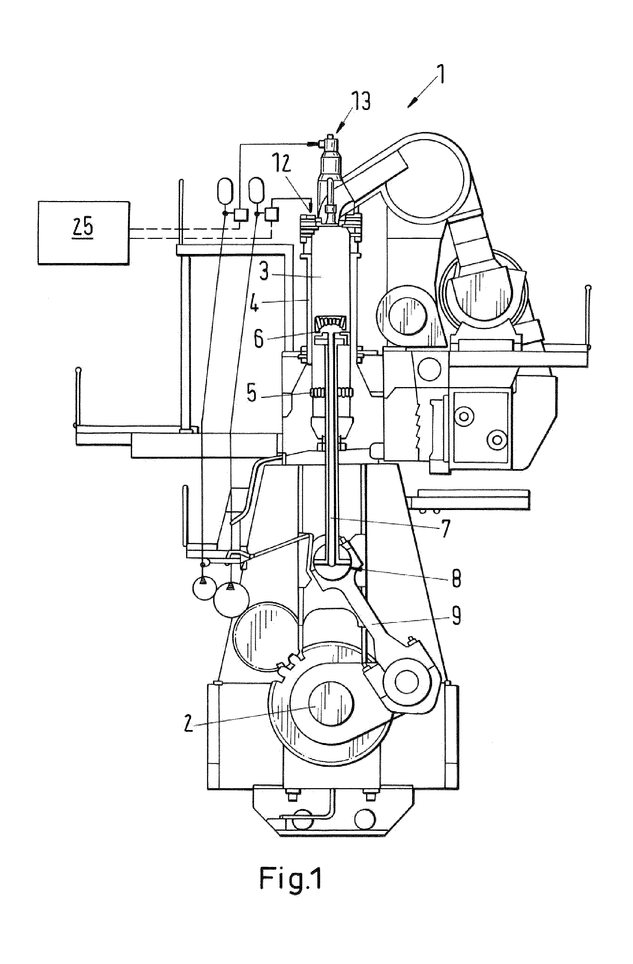

Fig. 1 shows an embodiment of a large reciprocating piston combustion engine 1 according to the present invention. The engine 1 shown contains at least one cylinder equipped with a cylinder liner 4, at least one piston 6 which is movably arranged within the cylinder liner, and a crankshaft 2 which is rotatably arranged and/or journalled in a crankshaft housing, with the piston 6 being in each case connected to a crosshead 8 via a piston rod 7 and with the crosshead being in each case connected to the crankshaft 2 via a connecting rod 9 to drive the crankshaft. In addition, either each crosshead or each piston or both are provided with a control apparatus for controlling the compression ratio of the reciprocating piston combustion engine. Typical embodiments of the control apparatus for controlling the compression ratio are described below in connection with the following figures.

The crosshead typically converts the rectilinear movement of the piston rod into a non-rectilinear movement of the connecting rod. The cylinder liner 4 is usually closed upwardly by a cylinder cover so that a combustion space 3 is respectively formed in the cylinder between the piston and the cylinder cover.

In addition, the large reciprocating piston combustion engine 1 can optionally contain one ore more of the following components: one ore more scavenging openings 5 in the lower part of the cylinder liner 4 for the inlet of scavenging air, one or more injection nozzles 12 arranged at the cylinder cover for injecting fuel, at least one exit valve 13 for controlling the discharge of exhaust gas, and an electronic control unit 25 for controlling exhaust valve actuation and/or the timing of the control apparatus for controlling the compression ratio in relation to the crankshaft position.

In an advantageous embodiment of the large reciprocating piston combustion engine the control apparatus comprises a drive mechanism provided in or at the cross head 8 or in or at a crosshead pin or in or at the piston 6 for moving the piston rod 7 with respect to the crosshead and in the same direction as the piston.

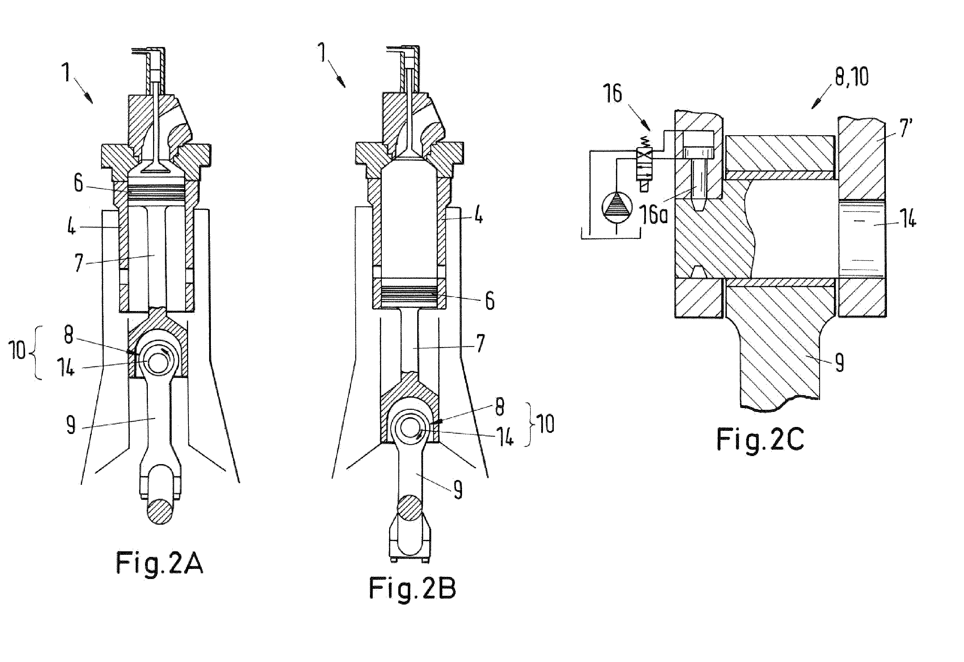

Figures 2A and B show a cross section through an embodiment of a control apparatus according to the present invention. In this embodiment the control apparatus 10 forms part of the crosshead 8 and comprises an eccentric crosshead pin 14 which is rotatable. Figures 2A and B in addition show parts of the large reciprocating piston combustion engine to which the control apparatus 10 belongs. A description of the large reciprocating piston combustion engine is given above in connection with the description of Fig. 1.

The control apparatus 10 advantageously comprises a locking mechanism for locking the crosshead pin and preventing it from rotating. Fig. 2C shows an embodiment of a locking mechanism 16 for the embodiment of Figures 2A und B. The locking mechanism contains a locking pin 16a which is able to engage with the crosshead pin 14 when activated. The locking pin 16a can for example be activated by a hydraulic valve.

In the following the term "gas forces" means the forces acting on the piston 6 due to gas compression and/or due to combustion in the combustion space and the term "mass forces" means the inertial forces exerted by the moving components such as the piston 6 and the piston rod 7.

The eccentric crosshead pin 14 is free to rotate within a defined angle when the locking mechanism is released. The gas and mass forces acting through the piston 6 and piston rod 7 on the eccentric crosshead pin will cause the crosshead pin to rotate to the low compression ratio position at the piston bottom dead centre (BDC) as shown in Fig. 2B. Switching from high compression ratio to low compression ratio will thus be possible from one cycle to next cycle with combustion during every revolution.

Switching from low compression ratio to high compression ratio is possible close to the piston top dead centre (TDC). No combustion should take place in the cylinder during the respective cycle when switching and the exhaust valve should preferably be open during one complete engine revolution. With no gas forces acting on the piston the mass forces will be the dominant force at TDC and will cause the crosshead pin to rotate to the high compression ratio position.

If the eccentric crosshead pin is at its top dead center or bottom dead centre it might be difficult to turn it by gas or mass forces. It can therefore be advantageous to limit the range of the rotation angle of the crosshead pin to less than 180° or slightly less than 180°.

Advantageously the locking mechanism is fast acting to allow changes of the compression ratio within one engine revolution. The compression ratio is preferably switched sequentially in the different cylinders to allow continuous operation at high load. Switching from high to low compression ratio can be done without significant loss in engine power since combustion can take place during every engine revolution, while changes from low to high compression ratio will cause a power loss since one firing has to be skipped to allow the switch of the compression ratio.

The system as a rule requires an electronically controlled engine to allow individual exhaust valve control and timing of the control of the locking mechanism in relation to the crankshaft position as well.

The advantages of this kind of system are that the compression ratio can be switched fast and that the system allows changes from one cycle to another. Another benefit is that the required amount of oil for switching is limited since only a locking mechanism has to be controlled. The system, on the other hand, requires a certain engine speed to operate since the mass forces depend on engine speed.

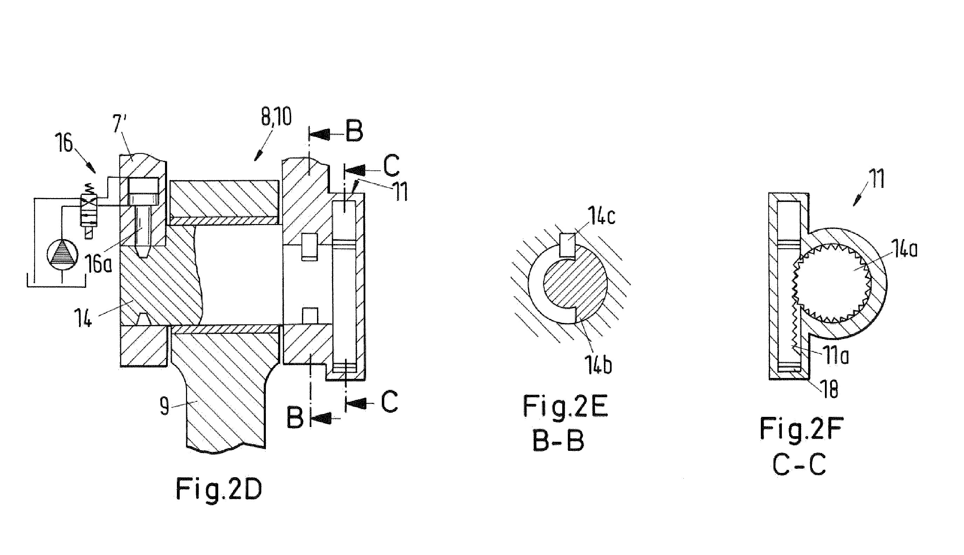

If requested the control apparatus 10 can comprise a turning mechanism for turning the crosshead pin 14 and assisting the change of the compression ratio. Figures 2D, E und F show an embodiment of a turning mechanism 11 for the embodiment of Figures 2A und B. The turning mechanism shown contains a toothed wheel or toothed sector 14a which is connected with the crosshead pin 14, a rack 11 a meshed with the toothed wheel, and a piston 18 for driving the rack. In addition, the turning mechanism can optionally contain a rotation limitation pin 14c and a cutout 14b engaging with the rotation limitation pin and provided at the crosshead pin 14 for limiting the rotation of the crosshead pin.

The advantage of such a turning mechanism is that the compression ratio can be changed also when the engine is not running.

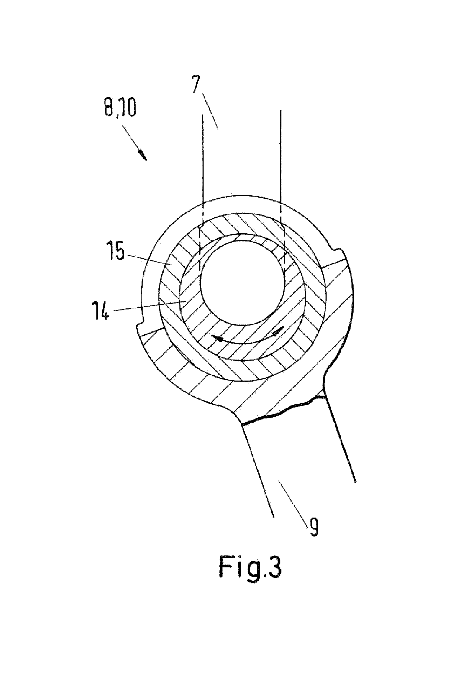

Fig. 3 shows a cross section through a second embodiment of a control apparatus according to the present invention. In this embodiment the control apparatus 10 forms part of the crosshead 8 and comprises an eccentric crosshead pin 14 which is rotatable, and a bearing shell 15. Fig.3 in addition shows part of a piston rod 7 and of a connecting rod 9 to which the control apparatus is usually connected.

The function of the control apparatus 10 shown in Fig. 3 is analogous to the function of the control apparatus shown in Figures 2A to F described above.

The control apparatus 10 shown in Fig. 3 has the advantage that the bearing shell is closed in the highly loaded part of the bearing and that therefore wear and maintenance of the bearing is the same as in conventional bearing constructions.

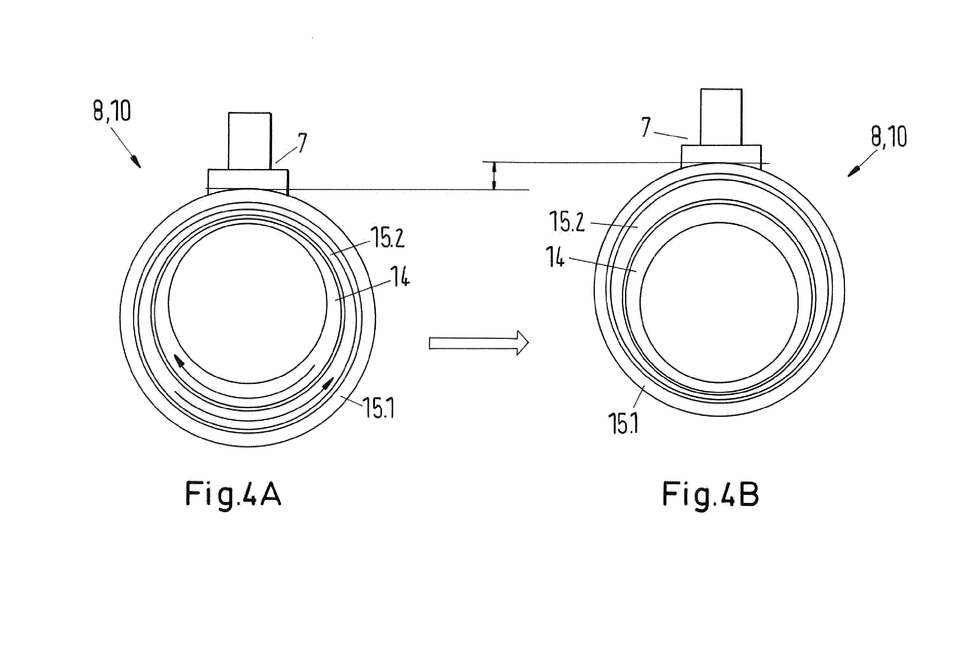

Figures 4A and B show cross sections through a third embodiment of a control apparatus according to the present invention. In this embodiment the control apparatus 10 forms part of the crosshead 8 and comprises an eccentric crosshead pin 14 which is rotatable, a bush 15.2 which is rotatable and which surrounds the eccentric part of the crosshead pin, and a bearing shell 15.1 which is non-rotatable. Figures 4A and B in addition show part of a piston rod 7 to which the control apparatus is usually connected.

For switching for example from low compression ratio to high compression ratio the eccentric crosshead pin14 is e.g. turned clockwise as shown in Fig. 4A while the bush 15.2 is turned counterclockwise. The control apparatus is thus moved to the high compression ratio position shown in Fig. 4B. During changing from low compression ratio to high compression ratio the piston rod 7 is moved upwardly without angular displacement when the crosshead pin and the bush are turned synchronously.

The control apparatus 10 shown in Figures 4A and B has the advantage that the piston rod can be kept in parallel to the cylinder liner when changing from low compression ratio to high compression ratio and vice versa.

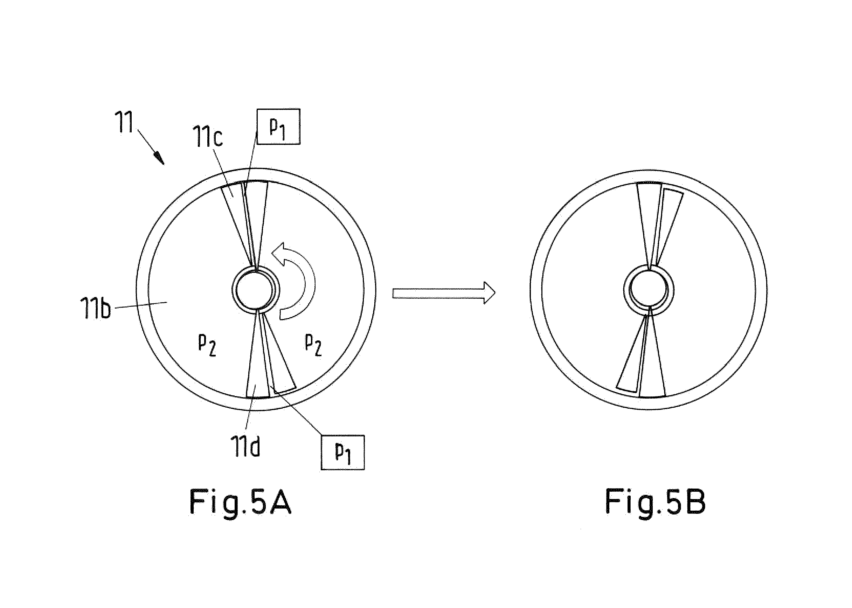

The control apparatus advantageously comprises one or two turning mechanisms for turning the crosshead pin 14 and the bush 15.2. Figures 5A and B show an embodiment of a turning mechanism 11 suitable for the embodiment of Figures 4A und B. The turning mechanism contains a cylindrical or sectorial space 11 b which can be divided into two halves by a parting wall 11d, one or more vanes 11c rotatably arranged in the cylindrical or sectorial space 11 and a side wall, not shown in Figures 5A and B, on each side which seal the cylindrical or sectorial space 11 and the vanes in axial direction.

In Fig. 5A the vanes are positioned close to one side of the parting wall 11 d and in Fig. 5B close to the other side of the of the parting wall. The vanes are turned from the position shown in Fig. 5A to the position shown in Fig. 5B when the pressure p₁ applied between the parting wall 11d and the vanes is higher than a pressure p₂ in the rest of the cylindrical or sectorial space 11.

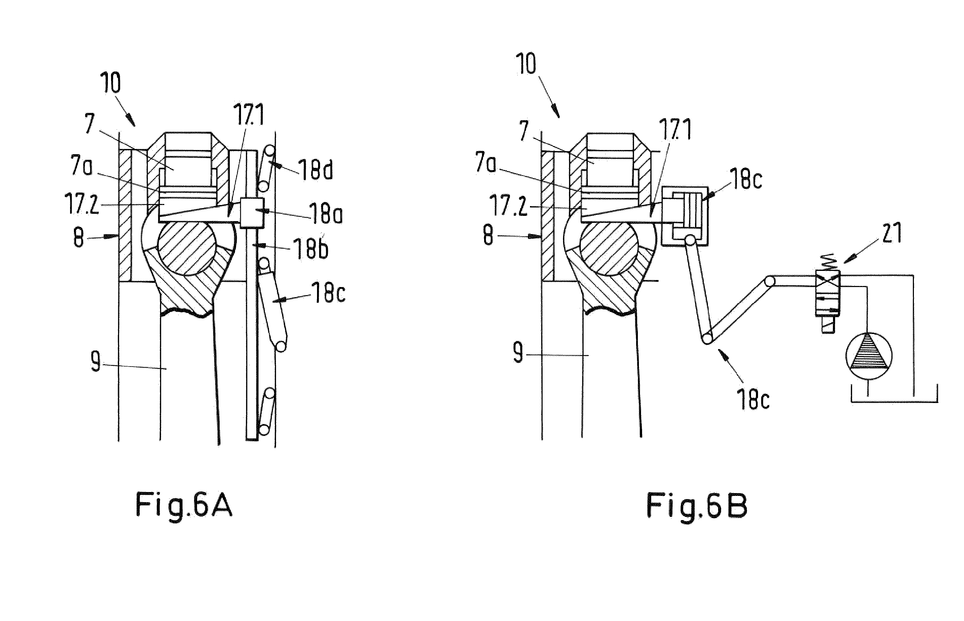

A fourth advantageous embodiment of a control apparatus according to the present invention is shown in Fig. 6A. The control apparatus 10 shown comprises at least one wedge shaped part 17.1 which is typically movable, a counterpart 17.2, for example a wedge shaped counterpart, being in working connection with both the wedge shaped part and a piston rod 7 and a drive mechanism 18a-d for moving either the wedge shaped part or the counterpart or both. The control apparatus can further comprise a piston 7a which is arranged at the lower end of the piston rod and to which the engine oil pressure can be applied to keep the piston rod 7 always in working connection with the counterpart 17.2. Typically the control apparatus 10 is provided in or at a crosshead 8 which is able to connect the piston rod 7 with a connecting rod 9.

The control apparatus shown in Fig. 6A further comprises a guide rail 18b and guide shoe 18a movably arranged on the guide rail and connected to the wedge shaped part 17.1 allowing the wedge shaped part to move together with the crosshead 8. The guide rail can for example be connected to a stationary surface via parallel arms 18d and via a hydraulic piston 18c to push the wedge shaped part 17.1 in between the piston rod 7 and a crosshead pin 14 for increasing the distance between the crosshead and the piston, and thus, for increasing the compression ratio.

A fifth advantageous embodiment of a control apparatus according to the present invention is shown in Fig. 6B. The control apparatus 10 shown comprises at least one wedge shaped part 17.1 which is typically movable, a counterpart 17.2, for example a wedge shaped counterpart, being in working connection with both the wedge shaped part and a piston rod 7 and a drive mechanism such as a hydraulic piston 18c arranged at, or in or on a crosshead 8 for moving either the wedge shaped part or the counterpart or both. The control apparatus can further comprise a piston 7a which is arranged at the lower end of the piston rod and to which the engine oil pressure can be applied to keep the piston rod 7 always in working connection with the counterpart 17.2.

The control apparatus shown in Fig. 6B further comprises a knee lever 18e carrying a tubing not shown in the figure and a control valve 21 for oil supply to the hydraulic piston 18c. Upon activation of the control valve oil pressure is applied to the hydraulic piston 18c and the wedge shaped part 17.1 is pushed in between the piston rod 7 and a crosshead pin 14 for increasing the distance between the crosshead and the piston, and thus, for increasing the compression ratio.

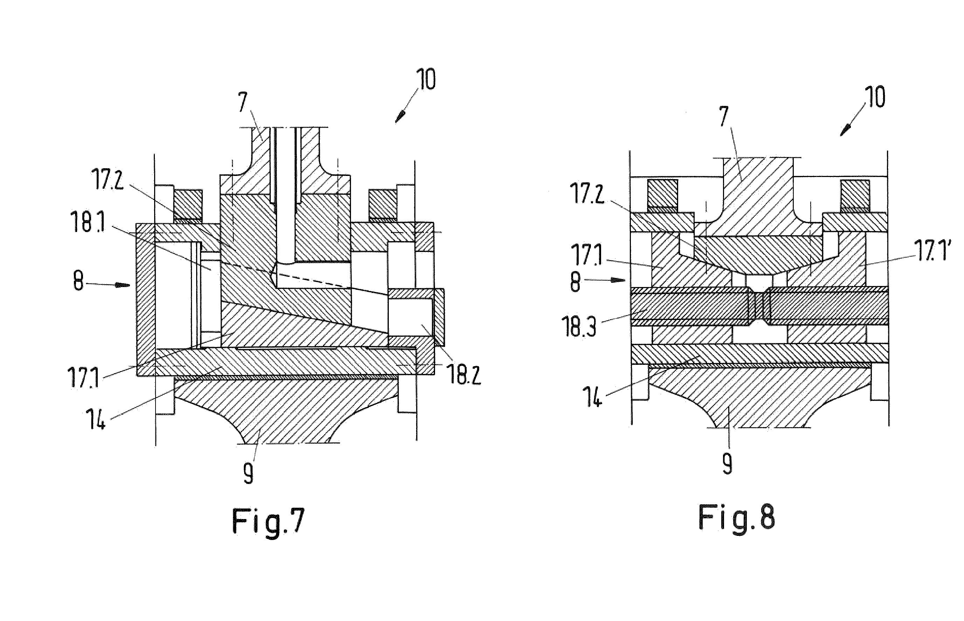

Fig. 7 shows a cross section through a sixth embodiment of a control apparatus according to the present invention. In this embodiment the control apparatus 10 forms part of the crosshead 8 and comprises at least one wedge shaped part 17.1 which is typically movable, a counterpart 17.2, for example a wedge shaped counterpart, being in working connection with both the wedge shaped part and a piston rod 7 and a drive mechanism 18.1, 18.2 for moving either the wedge shaped part or the counterpart or both. The control apparatus can further comprise a hydraulic piston, not shown in the figure, which is arranged at the lower end of the piston rod and to which the engine oil pressure can be applied to keep the piston rod 7 always in working connection with the counterpart 17.2. Typically the control apparatus 10 is provided in or at a crosshead 8 and preferably in or at a crosshead pin 14, for example in a hollow crosshead pin.

The drive mechanism shown in Fig. 7 contains two hydraulic pistons 18.1, 18.2 which can e.g. be connected to opposing sides of the wedge shaped part 17.1 respectively to push the wedge shaped part in between the piston rod 7 and the crosshead pin 14 for increasing the distance between the crosshead and the piston, and thus, for increasing the compression ratio, or to retract the wedge shaped part from the high compression ratio position for decreasing the distance between the crosshead and the piston, and thus, for decreasing the compression ratio.

Pressure is applied to either of the hydraulic pistons 18.1, 18.2. Servo oil can be used, and reasonable low oil pressures (less than 200 bar) are sufficient due to the force intensification of the wedge. Standard rotary unions are applicable to a knee lever. The wedge shaped part is pressed to a stop on either side such that it is not affected by the force from the piston, i.e. there is no cyclical compression and hence heating of the oil, and therefore no dissipation and no oil circulation needed. The compression ratio is, however, not continuously adjustable.

Fig. 8 shows a cross section through a seventh embodiment of a control apparatus according to the present invention. In this embodiment the control apparatus 10 forms part of the crosshead 8 and comprises at least one wedge shaped part 17.1, 17.1' which is typically movable, a counterpart 17.2, for example a wedge shaped counterpart being for example provided at a piston rod 7 and a drive mechanism 18.3 for moving either the wedge shaped part or the counterpart or both. The control apparatus can further comprise a hydraulic piston, not shown in the figure, arranged at the lower end of the piston rod to keep the piston rod 7 always in working connection with the wedge shaped part or parts 17.1, 17.1' and the counterpart 17.2. Typically the control apparatus 10 is provided in or at a crosshead 8 and preferably in or at a crosshead pin 14, for example in a hollow crosshead pin as shown in Fig. 8.

The control apparatus shown in Fig. 8 contains two wedge shaped parts 17.1, 17.1' arranged on either side of the counter part 17.2 and the drive mechanism contains a threaded bolt 18.3 traversing the wedge shaped parts and having two parts, a first part provided with a right-hand thread which engages with a threaded hole in the first wedge shaped part and a second part provided with a left-hand thread which engages with a threaded hole in the second wedge shaped part. The distance between the crosshead and the piston, and thus the compression ratio can be increased by turning the threaded bolt 18.3 such that the wedge shaped parts 17.1, 17.2 are moved to each other whereas the distance between the crosshead and the piston, and thus the compression ratio can be decreased by turning the threaded bolt in the opposite direction such that the wedge shaped parts are moved away from each other.

The control apparatus 10 shown in Fig. 8 has the advantage that the compression ratio can be adjusted continuously.

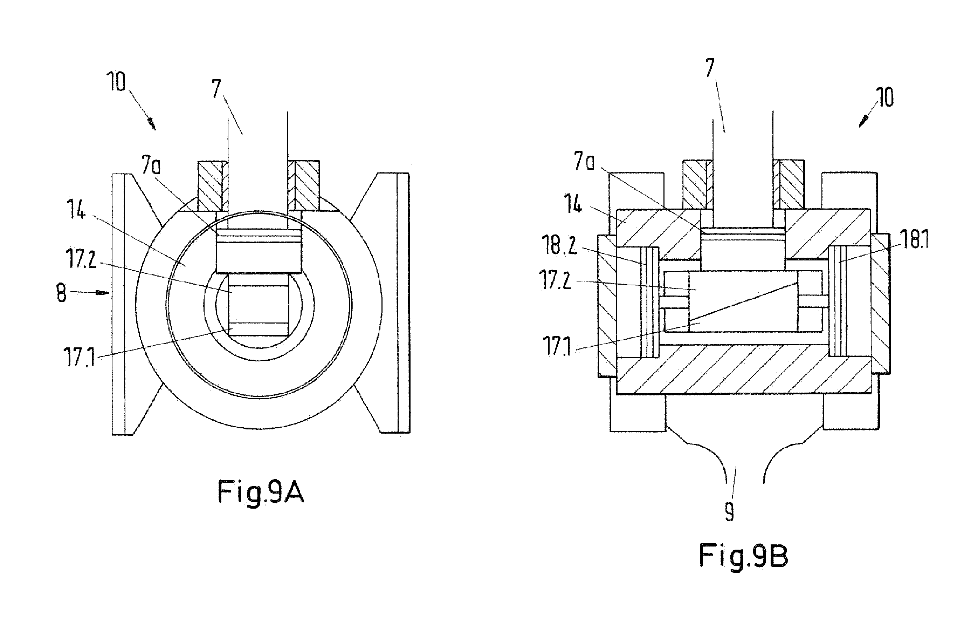

Figures 9A and B show cross sections of an eighth embodiment of a control apparatus according to the present invention. In this embodiment the control apparatus 10 forms part of the crosshead 8 and comprises at least one wedge shaped part 17.1 which is typically movable, a counterpart 17.2 in working connection with a piston rod 7, for example a wedge shaped counterpart as shown in Fig. 9B and a drive mechanism 18.1, 18.2 for moving either the wedge shaped part or the counterpart or both. The wedge shaped part 17.1 and wedge shaped counter part 17.2 can be double acting and can be driven by a hydraulic piston 18.2, 18.2 respectively as shown in Figures 9A and B. The control apparatus can further comprise a hydraulic piston 7a arranged at the lower end of the piston rod 7 to keep the piston rod always in working connection with the wedge shaped part 17.1 and the counterpart 17.2. Typically the control apparatus 10 is provided in or at a crosshead 8 and preferably in or at a crosshead pin 14, for example in a hollow crosshead pin as shown in Figures 9A and B.

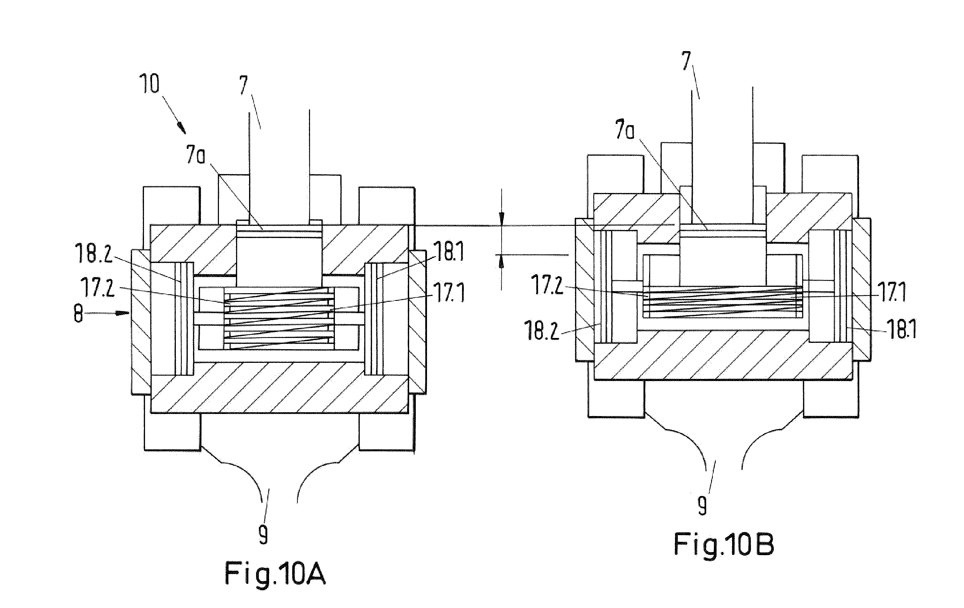

Figures 10A and B show cross sections of a ninth embodiment of a control apparatus according to the present invention. In this embodiment the control apparatus contains multiple wedge shaped parts 17.1 and multiple wedge shaped counter parts 17.2 which are double acting, engaged with each other and driven by a hydraulic piston 18.1, 18.2 respectively. In Fig. 10A the wedge shaped parts and multiple wedge shaped counter parts are pressed against each other by the hydraulic pistons 18.1, 18.2 thus moving the piston rod 7 to a top position corresponding to the high compression ratio position, and in Fig. 10B the wedge shaped parts and multiple wedge shaped counter parts are moved away from each other thus moving the piston rod 7 to a bottom position corresponding to the low compression ratio position.

The embodiment shown in Figures 10A and B is a variant of the embodiment shown in Figures 9A and B. Additional features and possible variants can therefore be taken from the description of Figures 9A and B above.

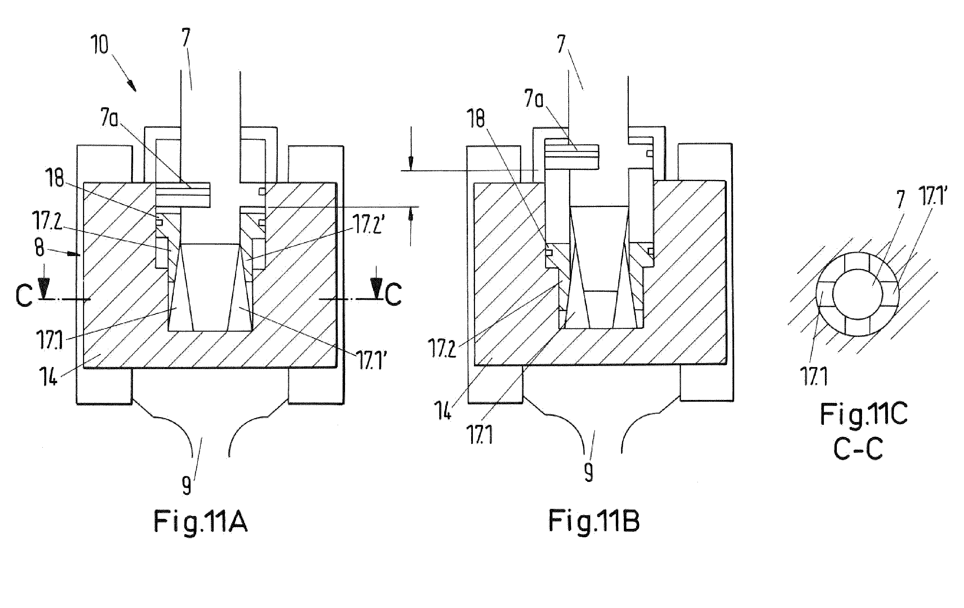

Figures 11A, B and C show cross sections through a tenth embodiment of a control apparatus according to the present invention. In this embodiment the control apparatus 10 forms part of the crosshead 8 and comprises at least one hydraulic piston 7a provided in connection with a piston rod 7 for moving the piston rod up and down with respect to the crosshead. If required, a second hydraulic piston 18 is provided in the crosshead 8 to press radially disposed wedges 17.1, 17.1' against a conical part of the piston rod 7 for fixing the piston rod in the top or bottom position corresponding to high and low compression ratio position respectively. Typically the control apparatus 10 is provided in or at a crosshead pin 14.

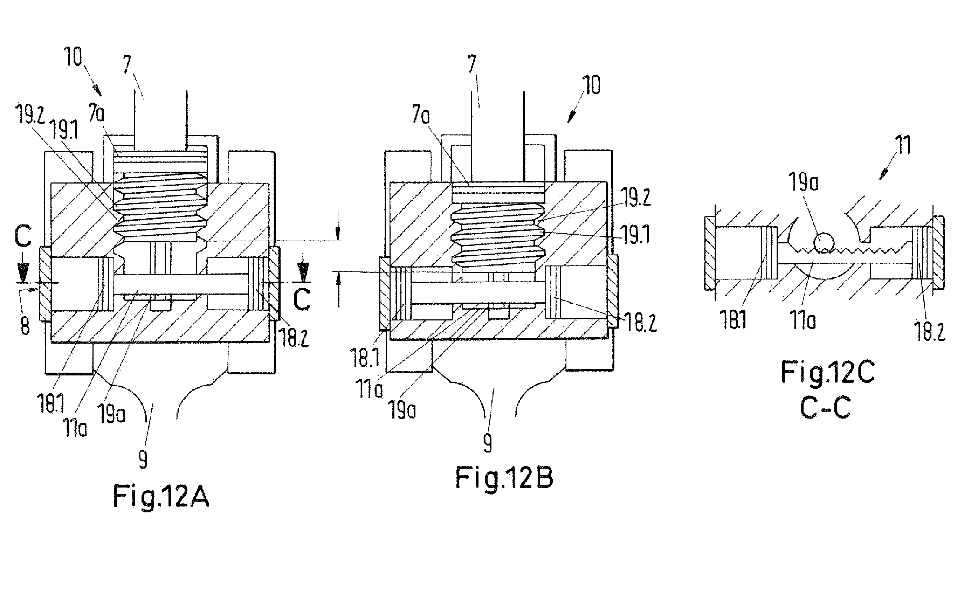

In an eleventh embodiment of a control apparatus according to the present invention shown in Figures 12 A, B and C the control apparatus 10 comprises a first thread part 19.1 provided in connection with a piston rod 7, for example at an end of the piston rod, a second thread part 19.2 mating with the first thread part, and a turning mechanism 11 provided in or at a cross head 8 or in or at the piston for turning the first or second thread part. The control apparatus can further comprise a hydraulic piston 7a arranged at the lower end of the piston rod 7 to keep the piston rod always in working connection with the first and/or second thread part. Typically the control apparatus 10 is provided in or at a crosshead 8 and preferably in or at a crosshead pin.

The turning mechanism 11 shown in Fig. 12C can e.g. contain a toothed rack 11 a meshed with a pinion 19a which is coupled with the first or second thread part 19.1, 19.2. The toothed rack is advantageously provided with either a double acting piston or a piston 18.1, 18.2 at both ends respectively for moving the toothed rack. In Figures 12 A and C the first piston 18.1 on the left side is activated and the toothed rack 11 a is moved to the opposite side thus turning the first thread part 19.1 such that the piston rod 7 is in its top position corresponding to the high compression ratio position. In Fig. 12B the second piston 18.2 on the opposite side is activated and the toothed rack is moved to the left side thus turning the first thread part such that the piston rod 7 is in its bottom position corresponding to the low compression ratio position.

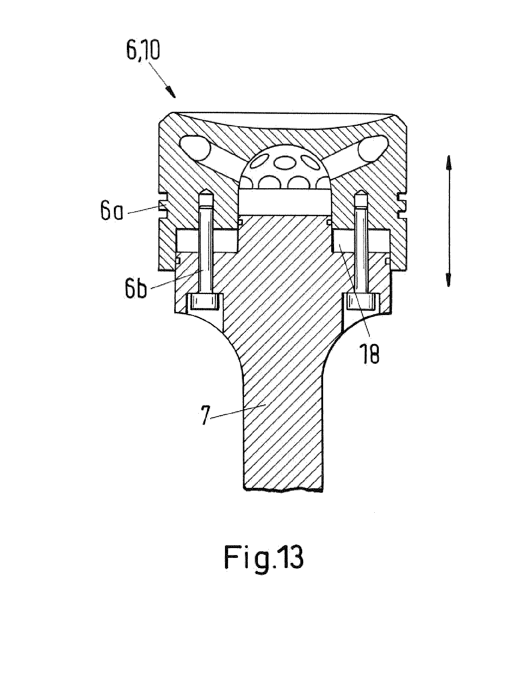

Fig. 13 shows a cross section of a twelfth embodiment of a control apparatus according to the present invention. In this embodiment the control apparatus 10 contains a piston 6 movably arranged on a piston rod 7. The control apparatus typically contains one or more guides 6b to guide the piston in axial direction and e.g. a hydraulic cylinder 18 for moving the piston 6 with respect to the piston rod 7. The piston can optionally have a ring support 6a moving either together with the piston or being fixed with respect to the piston rod.

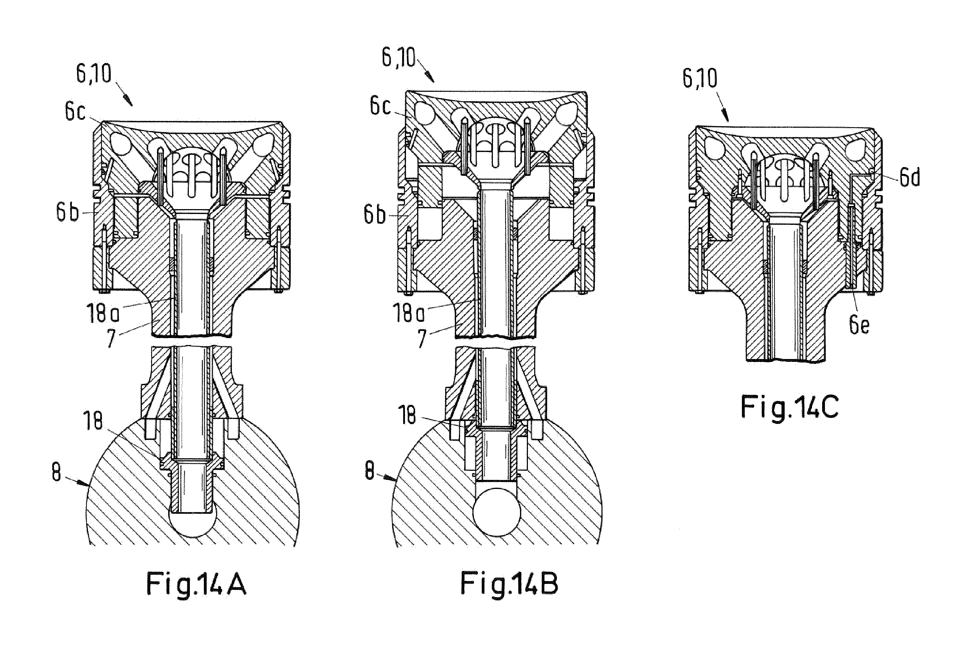

Figures 14A, B and C show cross sections of a thirteenth embodiment of a control apparatus according to the present invention. In this embodiment the control apparatus 10 contains a piston head equipped with an inner part 6c which is movable in axial direction. The piston can further have a ring support 6b and/or guides or guiding surfaces to guide the inner part of the piston head in axial direction. The sealing between inner and outer part of the piston head can for example be done with a gastight piston ring 6d at combustion side and a hydraulic sealing at cooling side as shown in Fig. 14C. The space between the two sealing is advantageously vented to piston underside via a venting connection 6e. Typically the control apparatus 10 forms part of the piston 6 or is provided in or at the piston.

The displacement of the inner part of the piston head can e.g. be done hydraulically, in such a way that the oil chamber between the piston head and piston rod is directly loaded. Tubes or boreholes along the piston rod are needed in this case.

A further possibility is to use the tube for cooling oil outlet as connecting piece 18a to a hydraulic piston 18, placed for example in or at the crosshead 8 or crosshead pin. With this driving mechanism upward movements are done only during periods with low axial force on the piston 6 (around 90° before TDC). Oil from piston cooling can be guided through a non return valve to the chamber between piston head and piston rod during an upwards movement. So the gas- and mass forces are advantageously taken up by this oil volume and not by the drive mechanism.

An advantage of this hydraulic system is that only a small amount of oil (with the necessary pressure) has to be delivered by the supply system; the big amount of oil entering the chamber below the piston head is kept flowing by the pressure difference between this chamber and the cooling oil supply. The large hydraulic surface of this chamber ensures that oil pressure and relative movements between inner- and outer part of the piston head during an engine cycle are only moderate.

Instead of the hydraulic system described above a drive mechanism from one of the preceding or subsequent embodiments can be used to lift the inner part of the piston head. Also in this case it is advantageous to use the oil chamber at the piston head to take up the gas and mass forces in order to keep the system small and to provide overload protection by the inherent elasticity of the system.

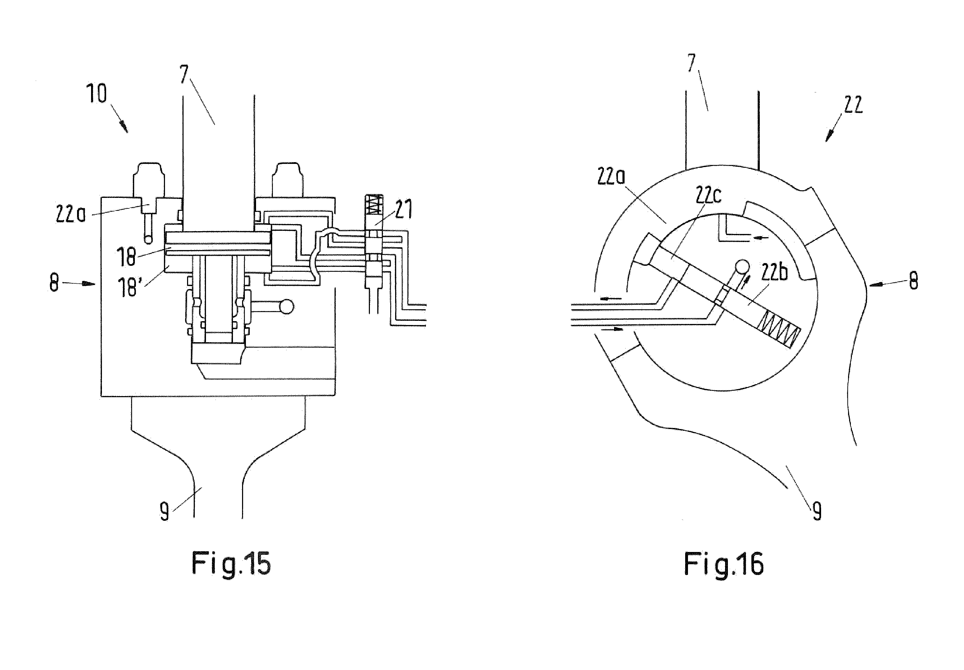

Fig. 15 shows a cross section of a fourteenth embodiment of a control apparatus according to the present invention. In this embodiment the control apparatus 10 contains a piston 18 in a hydraulic cylinder 18' arranged e.g. at the lower end of a piston rod 7 for moving the piston rod up and down. Typically the control apparatus 10 is provided in or at a crosshead 8 and preferably in or at a crosshead pin. If required a control valve 21 can be provided to control upward and downward moving of the hydraulic piston 18.

Under load the necessary force to move the piston rod upwards is comparatively high. Therefore it is recommended to do this movement only during a small period around 90° before TDC where the amount of mass- and gas forces reaches a minimum.

In a further advantageous embodiment the control apparatus according to the present invention comprises a swing pump for generating hydraulic pressure which can for example be used to activate a hydraulic piston in a drive mechanism of the control apparatus. The swing pump described below can, however, also be regarded as an own subject which can be used independent of the present application for generating pressure from the rotational movement in a joint.

Fig. 16 shows an embodiment of a swing pump for a control apparatus according to the present invention. In this embodiment the swing pump 22 comprises a hollow space having for example the form of a annular segment and a swinging piston 22a fitting into the hollow space, for example fitting in a sealing way into the hollow space, with either the hollow space or the swinging piston being connected to an end part of a connecting rod 9 so that the swinging piston 22 oscillates in the hollow space when the connecting rod is moved in operation.

The hollow space can for example be provided in or at the crosshead 8 or in or at a crosshead pin as shown in Fig. 16 and the swinging piston 22a can be provided at an upper end of a connecting rod 9, for example at a bearing cover of the upper bearing of the connecting rod. The swing pump 22 advantageously comprises a second piston 22b, such as a linearly moving piston, having a spring, with the second piston acting as pressure accumulator 22c and/or control valve, for example as non-return valve and/or as timing control for the displacement of a piston rod or engine piston.

In the large reciprocating piston combustion engine according to the present invention the swinging movement of the connecting rod reaches the maximal amplitudes at an engine angle of 90° and 270° after TDC, with one maximal amplitude, e.g. at 270° after TDC corresponding to maximal pressure generated by the swing pump. This is exactly the time when the upwards movement of the piston rod or engine piston should take place. Thus the high pressure of the swing pump can be used to lift the engine piston at an engine angle of 270° after TDC. 180° later, at 90° after TDC the swinging piston opens an oil inlet and the system oil pressure refills the pump. During several revolutions of the engine the engine piston will be lifted up to its top position corresponding to the high compression ratio position.

To lower the engine piston the pressure of the swing pump is guided to the upper side of the hydraulic piston 18 at the piston rod 7 shown in Fig. 15. Together with the gas- and mass forces, mainly acting downwards, it is possible to move the engine piston downwards to its bottom position, i.e. to low compression ratio position in one engine cycle.

An embodiment of a method in accordance with the invention for controlling the compression ratio of a large reciprocating piston combustion engine will be described in the following with reference to Figures 1 to 16. In this embodiment the method includes providing a large reciprocating piston combustion engine 1 comprising at least one cylinder equipped with a cylinder liner 4, at least one piston 6 which is movably arranged within the cylinder liner, and a crankshaft 2 which is rotatably arranged in a crankshaft housing, with the piston 6 being in each case connected to a crosshead 8 via a piston rod 7 and with the crosshead being in each case connected to the crankshaft 2 via a connecting rod 9 to drive the crankshaft. The method in addition includes providing each crosshead 8 and/or each piston 6 with a control apparatus 10 for controlling the compression ratio of the reciprocating piston combustion engine 1, and changing the compression ratio when a different fuel quality is supplied having different ignition properties or when the fuel supply is changed, for example from diesel oil to gas or from gas to diesel oil.

The change of compression ratio is advantageously done utilizing the mass forces acting on the moving components. Thus, the change from low to high compression ratio is done when the piston is moving upwards towards the top dead centre and the change from high to low compression ratio when the piston is moving downwards towards the bottom dead centre.

The large reciprocating piston combustion engine and the control apparatus and the method for controlling the compression ratio of a large reciprocating piston combustion engine according to the above described embodiments and embodiment variants have the advantage that the control apparatus can be integrated into the crosshead or into the piston of the large reciprocating piston combustion engine, thus needing little or no extra-space.

## Claims

1. A large reciprocating piston combustion engine (1) having at least one cylinder equipped with a cylinder liner (4), at least one piston (6) which is movably arranged within the cylinder liner, and a crankshaft (2) which is rotatably arranged in a crankshaft housing, with the piston (6) being in each case connected to a crosshead (8) via a piston rod (7), and with the crosshead being in each case connected to the crankshaft (2) via a connecting rod (9) to drive the crankshaft, **characterized in that** the crosshead (8) is provided in each case with a control apparatus (10) for controlling the compression ratio of the reciprocating piston combustion engine and/or **in that** the piston (6) is provided in each case with a control apparatus (10) for controlling the compression ratio of the reciprocating piston combustion engine.

2. Reciprocating piston combustion engine according to claim 1, wherein the crosshead (8) converts the rectilinear movement of the piston rod (7) into a non-rectilinear movement of the connecting rod (9).

3. Reciprocating piston combustion engine according to claim 1 or 2, wherein the control apparatus (10) comprises a drive mechanism (11, 18) provided in or at the cross head (8) or in or at a crosshead pin (14) for displacing the piston rod (7) and/or piston (6) with respect to the crosshead (8).

4. Reciprocating piston combustion engine according to any of claims 1 to 3, wherein the control apparatus (10) comprises an eccentric crosshead pin (14) which is rotatable.

5. Reciprocating piston combustion engine according to any of claims 1 to 4, wherein the control apparatus (10) comprises an eccentric bush (15.2) mating with a crosshead pin (14), and wherein the bush is rotatable.

6. Reciprocating piston combustion engine according to claim 4 or 5, wherein the control apparatus (10) comprises a turning mechanism (11) for turning either the crosshead pin (14) or the bush (15.2) or both, and/or a locking mechanism (16) for locking either the crosshead pin or the bush or both.

7. Reciprocating piston combustion engine according to any of claims 1 to 6, wherein the control apparatus (10) comprises a first thread part (19.1) provided in connection with the piston rod (7), in particular at an end of the piston rod, a second thread part (17.2) mating with the first thread part, and a turning mechanism (11) provided in or at the cross head (8) or in or at the piston (6) for turning the first or second thread part.

8. Reciprocating piston combustion engine according to any of the preceding claims, wherein the control apparatus (10) comprises at least one wedge shaped part (17.1), a counterpart (17.2), in particular a wedge shaped counterpart, being in working connection with both the wedge shaped part and the piston rod (7) and a drive mechanism (18.1, 18.2, 18.3) for moving either the wedge shaped part or the counterpart or both.

9. Reciprocating piston combustion engine according to any of the preceding claims, wherein the control apparatus (10) comprises a guide (6b) for moving the piston (6) with respect to and in parallel with the piston rod (7), or a piston head which is either movable or which contains a movable insert (6c), and wherein the control apparatus further comprises a drive mechanism (18) for moving the piston (6) with respect to the piston rod (7), or the piston head with respect to the piston or piston rod, or the insert (6c) with respect to the piston head or piston.

10. Reciprocating piston combustion engine according to any of the claims 3 to 9, wherein the turning mechanism (11) or the drive mechanism (18, 18.1, 18.2, 18.3) is driven hydraulically.

11. Reciprocating piston combustion engine according to any of the preceding claims, wherein the control apparatus (10) comprises a hydraulic swing pump (22) arranged in or at the crosshead (8) for generating hydraulic pressure, and wherein the swing pump (22) comprises a hollow space, in particular a hollow space having the form of a annular segment, and a swinging piston (22a) fitting into the hollow space, with either the hollow space or the swinging piston being connected to an end part of a connecting rod (9) so that the swinging piston (22a) oscillates in the hollow space when the connecting rod is moved in operation.

12. A control apparatus (10) for controlling the compression ratio of a large reciprocating piston combustion engine wherein the reciprocating piston combustion engine comprises at least one cylinder equipped with a cylinder liner (4), at least one piston (6) which is movably arranged within the cylinder liner, and a crankshaft (2) which is rotatably arranged in a crankshaft housing, with each piston being connected to a respective crosshead (8) via a piston rod (7) and with each crosshead being connected to the crankshaft (2) via a connecting rod (9) to drive the crankshaft, **characterized**
**in that** the control apparatus (10) is in each case designed as part of the crosshead (8) or integrated into the crosshead or into the crosshead pin (14).

13. Control apparatus according to claim 12, wherein the control apparatus (10) comprises a drive mechanism (11, 18, 18.1, 18.2, 18.3) for displacing the piston rod (7) with respect to the crosshead (8) and in the same direction as the piston (6).

14. Method for controlling the compression ratio of a large reciprocating piston combustion engine wherein the method includes providing a large reciprocating piston combustion engine (1) comprising at least one cylinder equipped with a cylinder liner (4), at least one piston (6) which is movably arranged within the cylinder liner, and a crankshaft (2) which is rotatably arranged in a crankshaft housing, with the piston (6) being in each case connected to a crosshead (8) via a piston rod (7) and with the crosshead being in each case connected to the crankshaft (2) via a connecting rod (9) to drive the crankshaft, **characterized in that** the method in addition includes providing each crosshead (8) and/or each piston (6) with a control apparatus (10) for controlling the compression ratio of the reciprocating piston combustion engine (1), and changing the compression ratio when a different fuel quality is supplied having different ignition properties or when the fuel supply is changed from diesel oil to gas or from gas to diesel oil.
